**Europäisches Patentamt**

**European Patent Office**

**Office européen des brevets**

(19)

(11) Veröffentlichungsnummer: **0 252 375**
**B1**

(12) # EUROPÄISCHE PATENTSCHRIFT

(45) Veröffentlichungstag der Patentschrift:
**24.10.90**

(51) Int. Cl.⁵: **G21C 19/26**, G21C 3/32

(21) Anmeldenummer: **87109129.4**

(22) Anmeldetag: **25.06.87**

(54) Verfahren zum Reparieren eines Kernreaktorbrennelementes und Austauschstab für ein solches Verfahren.

(30) Priorität: **08.07.86 DE 3622852**

(43) Veröffentlichungstag der Anmeldung:
**13.01.88 Patentblatt 88/2**

(45) Bekanntmachung des Hinweises auf die Patenterteilung:
**24.10.90 Patentblatt 90/43**

(84) Benannte Vertragsstaaten:
**DE FR**

(56) Entgegenhaltungen:
**DE-A- 1 639 307**
**DE-A- 3 202 238**
**FR-A- 2 360 963**
**FR-A- 2 477 754**
**FR-A- 2 524 684**

(73) Patentinhaber: **Siemens Aktiengesellschaft,**
**Wittelsbacherplatz 2, D-8000 München 2(DE)**

(72) Erfinder: **Fick, Peter, Werner-von-Siemens Strasse 8,**
**D-8520 Erlangen(DE)**
Erfinder: **Knecht, Klaus, Dipl.-Ing., Lachnerstrasse 40,**
**D-8520 Erlangen(DE)**

## Beschreibung

Die Erfindung betrifft ein Verfahren zum Reparieren eines Kernreaktorbrennelementes nach dem Gattungsbegriff des Patentanspruches 1 und einen Austauschstab für ein solches Verfahren.

Ein derartiges Verfahren ist aus der deutschen Offenlegungsschrift DE-A 2 635 501 bekannt. Bei diesem bekannten Verfahren wird ein defekter und bestrahlter, mit Kernbrennstoff gefüllter Brennstab aus dem Kernreaktorbrennelement entfernt und durch einen neuen mit Kernbrennstoff gefüllten Austauschstab ersetzt, der mit einem Brennstabwechselwerkzeug in das Kernreaktorbrennelement in die Masche des gitterförmigen Abstandhalters eingeschoben wird, in der sich der defekte Brennstab befand.

Dieses Verfahren ist jedoch nicht anwendbar, wenn die in der betreffenden Masche des gitterförmigen Abstandshalters befindliche Feder ausgebrochen ist oder keine ausreichende Federkraft mehr hat. Weder der in dieser Masche ursprünglich befindliche Brennstab noch ein Austauschstab kann dann in der Masche des Abstandhalters des Kernreaktorbrennelementes sicher gehaltert werden.

Man kann aber auch in der Regel die Masche des Abstandhalters des Kernreaktorbrennelementes, in der die Feder zum kraftschlüssigen Haltern eines Brennstabes gebrochen oder unbrauchbar ist, nicht einfach unbesetzt lassen, da im Kernreaktor der Raum für den im Kernreaktorbrennelement fehlenden Brennstab durch Wasser eingenommen wird, was eine Veränderung der Moderationswirkung des Wassers im Kernreaktor auf die dort befindlichen Neutronen zur Folge hat. Außerdem führt der fehlende Brennstab zu einer Veränderung der Geschwindigkeit des den Kernreaktor als Kühlmittel durchströmenden Wassers, so daß Schwingungen der noch im Kernreaktorbrennelement befindlichen Brennstäbe und damit weitere Beschädigungen dieses Kernrekatorbrennelementes nicht ausgeschlossen werden können.

Zur Nutzung eines noch immer vorhandenen erheblichen Abbrandpotentials der bestrahlten Brennstäbe eines Kernreaktorbrennelementes mit einer gebrochenen Feder in einer Masche des Abstandhalters kann man alle diese bestrahlten Brennstäbe aus dem Kernreaktorbrennelement herausziehen und unter Bildung eines anderen Kernreaktorbrennelementes in ein neues Brennelementskelett umsetzen, das im wesentlichen aus neuen Abstandhaltern sowie aus einem Kopf- und einem Fußteil besteht, welche durch Steuerabführungsrohre fest miteinander verbunden sind, die durch Maschen der Abstandhalter greifen.

Dieses Verfahren ist jedoch sehr zeitaufwendig und führt deshalb zu hohen Reparaturkosten. Hinzu kommen Entsorgungskosten für das bestrahlte Skelett des alten Kernreaktorbrennelementes.

Der Erfindung liegt die Aufgabe zugrunde, das Reparieren eines Kernreaktorbrennelementes mit einer unbrauchbaren Feder zum kraftschlüssigen Haltern eines Brennstabes in einer Masche des Abstandhalters einfacher und kostengünstiger zu gestalten.

Zur Lösung dieser Aufgabe wird ein Verfahren der eingangs erwähnten Art erfindungsgemäß nach dem kennzeichnenden Teil des Patentanspruches 1 durchgeführt.

Durch Verwenden des Austauschstabes bleiben die Reparaturkosten für das Brennelement etwa die gleichen wie beim bekannten Reparaturverfahren. Trotzdem weist das Kernreaktorbrennelement an der Stelle des durch den Austauschstab ersetzten Brennstabes keine Leerstelle auf.

Ein Austauschstab für dieses Verfahren hat günstigerweise die Merkmale des kennzeichnenden Teiles des Patentanspruches 3.

Die Erfindung und ihre Vorteile seien anhand der Zeichnung an einem Ausführungsbeispiel näher erläutert:

Figur 1 zeigt im Längsschnitt einen Austauschstab gemäß der Erfindung.

Figur 2 zeigt einen Ausschnitt eines zum Längsschnitt nach Figur 1 rechtwinkligen Längsschnittes zwischen den beiden Pfeilen II-II in Figur 1.

Figur 3 zeigt in Seitenansicht ein Betätigungswerkzeug für einen Austauschstab nach den Figuren 1 und 2 in einem Wasserbecken.

Figur 4 zeigt einen Längsschnitt durch das Betätigungswerkzeug nach Figur 3.

Figur 5 zeigt eine Einzelheit V des Betätigungswerkzeuges nach Figur 4.

Figur 6 zeigt in Seitenansicht das Betätigungswerkzeug nach Figuren 4 und 5 mit einem Austauschstab, der in einem Abstandhalter eines Kernreaktorbrennelementes angeordnet ist.

Figur 7 zeigt im Längsschnitt entsprechend der strichpunktierten Linie VII-VII in Figur 8 den Teil des Austauschstabes nach Figur 6, der sich in der Masche des Abstandhalters befindet.

Figur 8 zeigt eine Draufsicht auf die Masche des Abstandhalters mit dem Austauschstab nach Figur 7.

Figur 9 und Figur 10 zeigen einen Ausschnitt aus dem Längsschnitt durch den Austauschstab entsprechend Figur 1.

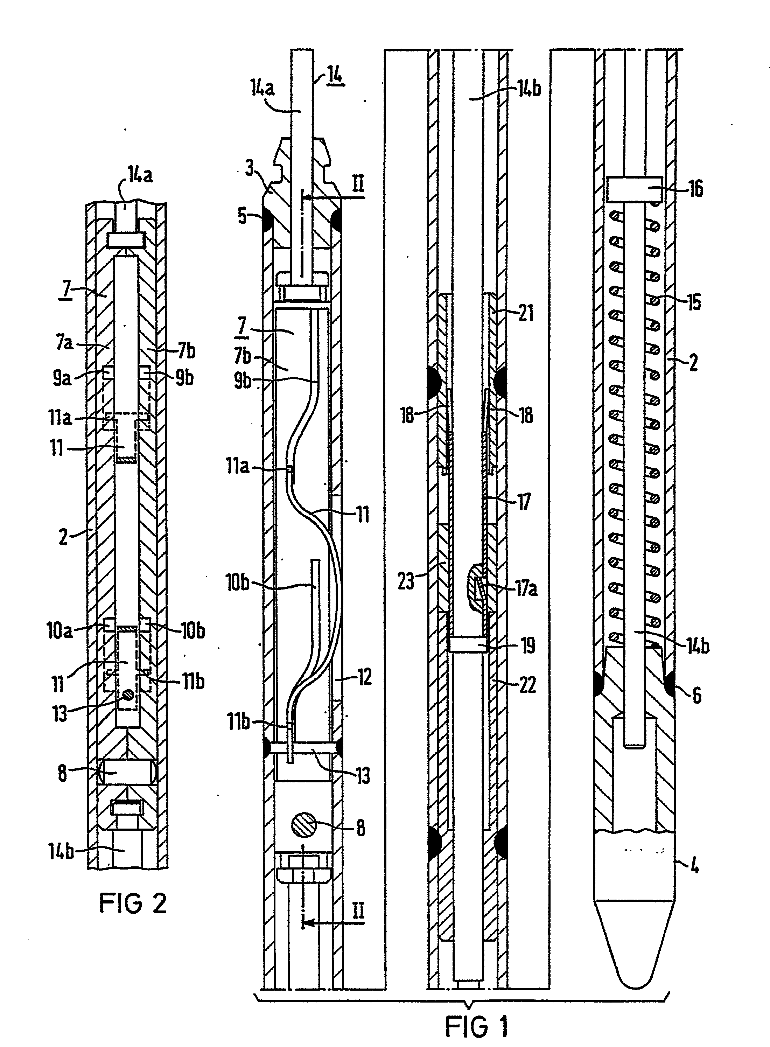

Der Austauschstab entsprechend den Figuren 1 und 2 weist ein Hüllrohr 2 aus einer Zirkonium-Legierung auf, das an jedem Ende mit einer Endkappe 3 bzw. 4 verschlossen ist. Diese Endkappen 3 und 4 sind an Schweißstellen 5 und 6 mit dem Mantel des Hüllrohres 2 verschweißt.

Im Hüllrohr 2 ist ein sich in Längsrichtung des Hüllrohres 2 erstreckender Gleitkörper 7 angeordnet. Dieser Gleitkörper 7 ist aus zwei Halbkörpern 7a und 7b zusammengesetzt, die durch einen Querstift 8 zusammengehalten sind.

Auf ihren zugewandten Längsseiten haben die Halbkörper 7a und 7b Kulissen 9a, 10a und 9b, 10b. Die Kulissen 9a und 10a des Halbkörpers 7a haben in Längsrichtung des Hüllrohres 2 voneinander Abstand. Das gleiche gilt für die Kulissen 9b und 10b des Halbkörpers 7b.

Zwischen den beiden Halbkörpern 7a und 7b ist eine Haltefeder 11 aus einer U-förmig ausgebildeten Blattfeder angeordnet, die an jedem Ende einen Quersteg 11a bzw. 11b bildet. Der Quersteg 11a greift

in die Kulissen 9a und 9b, während der Quersteg 11b in die Kulissen 10a und 10b greift. Der Mantel des Hüllrohres 2 ist mit einer Durchführung 12 versehen, durch die die Kehle der aus der U-förmig ausgebildeten Blattfeder bestehenden Haltefeder 11 nach außen greifen kann.

Zwischen den beiden Halbkörpern 7a und 7b befindet sich ferner ein Querstift 13, der am Mantel des Hüllrohres 2 festgeschweißt ist und der mit Spiel durch das eine Ende der Haltefeder 11 geführt ist. Durch diesen Querstift 13 ist also die Haltefeder 11 in Längsrichtung des Hüllrohres 2 fixiert.

Der Gleitkörper 7 ist mit einer zum Hüllrohr 2 koaxialen zweiteiligen Betätigungsstange 14 versehen. Der eine Teil 14a der Betätigungsstange 14 greift durch eine Durchführung in der Endkappe 3 des Austauschstabes und ist an dem einen Ende des Gleitkörpers 7 angebracht. Der andere Teil 14b der Betätigungsstange 14 greift durch eine Durchführung in der Endkappe 4 des Austauschstabes und ist an dem anderen Ende des Gleitkörpers 7 angebracht. Die Betätigungsstange 4 ist in den Durchführungen der Endkappen 3 und 4 in Längsrichtung des Hüllrohres hin und her verschiebbar. Auf dem Teil 14b der Betätigungsstange 14 sitzt eine Schraubenfeder 15, die sich als Druckfeder mit einem Ende an der Endkappe 4 und mit dem anderen Ende an einem mit dem Teil 14b der Betäti gungsstange 14 starr verbundenen Stützkörpers 16 abstützt.

Etwa in der Mitte zwischen dem Stützkörper 16 und dem Gleitkörper 7 sitzt auf dem Teil 14b der Betätigungsstange 14 eine Stahlhülse 17. Diese Stahlhülse 17 liegt an einem Haltekörper 19 auf dem Teil 14b der Betätigungsstange 14 an und ist mit einer Zunge 17a ortsfest in diesen Teil 14b verrastet.

Am Ende der Stahlhülse 17, das dem Gleitkörper 7 und dem in der Endkappe 3 geführten Teil 14a der Betätigungsstange 14 zugewandt ist, sind als Arretierorgan zwei Zungenfedern 18 ausgebildet, die sich in Längsrichtung der Betätigungsstange 14 und damit des Hüllrohres 2 erstrecken, beide gleich lang sind und voneinander einen Winkelabstand von 180° haben. Damit ist also das der Endkappe 4 zugewandte Ende der Zungenfedern 18 am Teil 14b der Betätigungsstange 4 befestigt, während das andere der Endkappe 3 zugewandte Ende der sich in Längsrichtung des Hüllrohres 2 erstreckenden Zungenfedern 18 von der Mantelfläche des Teiles 14b der Betätigungsstange 14 abzustehen sucht.

Auf der Innenseite des Hüllrohres 2 sind mit Abstand voneinander zwei Hülsen 21 und 22 aus einer Zirkonium-Legierung koaxial zum Hüllrohr 2 festgeschweißt, durch die das Teil 14b der Betätigungsstange 14 geführt ist. Die Hülse 21 am Ende des Hüllrohres 2 mit der Endkappe 3 bildet eine innen am Hüllrohr 2 vorstehende Arretierschulter für die das Arretierorgan darstellenden Zungenfedern 18, die die Hülse 21 an ihrem der Endkappe 4 zugewandten Ende hintergreifen können.

Die Hülse 22 bildet eine innen am Hüllrohr 2 vorstehende Anschlagschulter für eine Klemmhülse 23 aus einer Zirkoniumlegierung, die koaxial zwischen den Hülsen 21 und 22 in Längsrichtung des Hüllrohres 2 hin und her verschiebbar angeordnet ist und durch den Teil 14b der Betätigungsstange 14 mit der Stahlhülse 17 geführt ist.

Die innere Mantelfläche der Klemmhülse 23 überragt die innere Mantelfläche der Hülse 21 und damit die den Zungenfedern 18 zugeordnete Arretierschulter in radialer Richtung. Andererseits hat die innere Mantelfläche der Klemmhülse 23 auch radialen Abstand vom Teil 14b der Betätigungsstange 14, der etwas größer ist als die Dicke der Stahlhülse 17 und der Zungenfedern 18. Ferner ist der Abstand der die Arretierschulter und die Anschlagschulter bildenden Hülsen 21 und 22 voneinander in Längsrichtung des Hüllrohres 2 größer als die Summe aus der Länge der Klemmhülse 23 und der Länge der Zungenfedern 18 in Längsrichtung der Betätigungsstange 14.

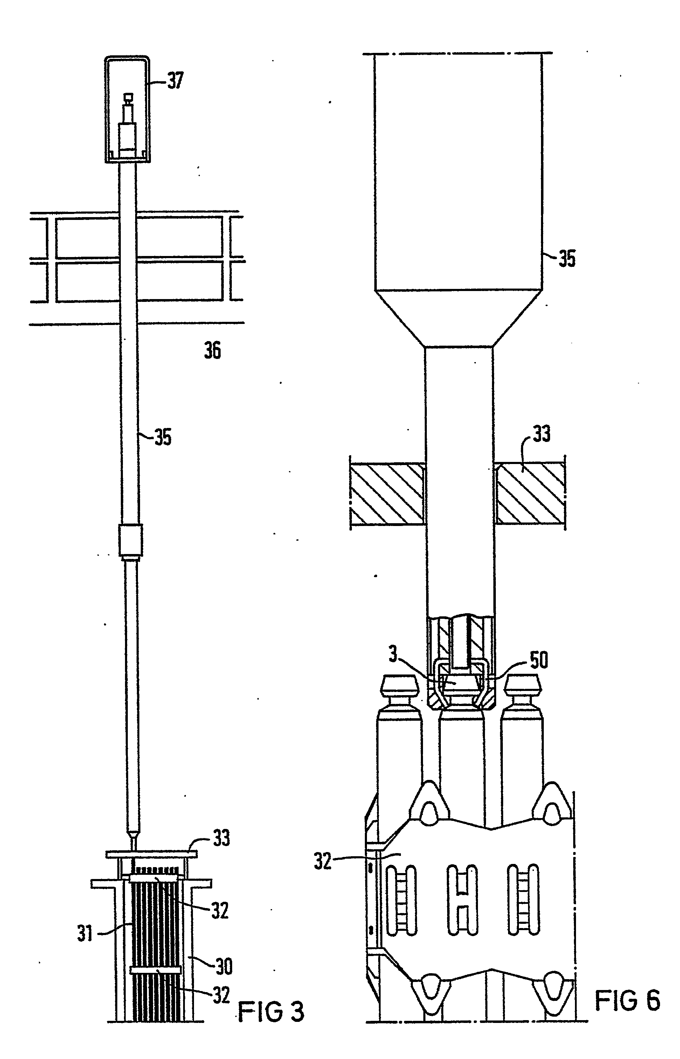

In Figur 3 ist ein Haltekorb 30 dargestellt, der sich unter Wasser in einem Brennelementbecken befindet. In diesem Haltekorb befindet sich ein Kernreaktorbrennelement 31 mit dem Fußende nach oben. Von diesem Fußende ist der Fußteil des Kernreaktorbrennelementes abmontiert. Ferner ist dem Kernreaktorbrennelement 31 mit einem in der DE-A 2 635 501 dargestellten Brennstabwechselwerkzeug aus miteinander fluchtenden Maschen der Abstandhalter 32 ein bestrahlter Brennstab entnommen worden, da in der Masche einer der Abstandhalter 32 eine Feder ausgebrochen ist, die zum kraftschlüssigen Haltern des Brennstabes bestimmt ist. Auf dem Halterungkorb 30 ist über dem Fußende des Kernreaktorbrennelementes eine Zentrierplatte 33 angebracht, durch die hindurch mit dem Brennstabwechselwerkzeug nach der DE-A 2 635 501 ein Austauschstab entsprechend den Figuren 1 und 2 in die leeren fluchtenden Maschen der Abstandhalter 32 des Kernreaktorbrennelementes 31 eingesetzt worden ist.

Mit einem in Figur 3 erkennbaren Betätigungswerkzeug 35, das durch eine entsprechende Zentrierdurchführung in der Zentrierplatte 33 greift und das an einem nicht näher dargestellten Kran hängt, wird von einer Bedienungsperson auf einer Arbeitsbrücke 36 über dem Brennelementbecken der Austauschstab genau im Kernreaktorbrennelement 31 positioniert und in der Masche des betreffenden Abstandhalters 32 mit ausgebrochener Feder schließlich kraftschlüssig gehaltert.

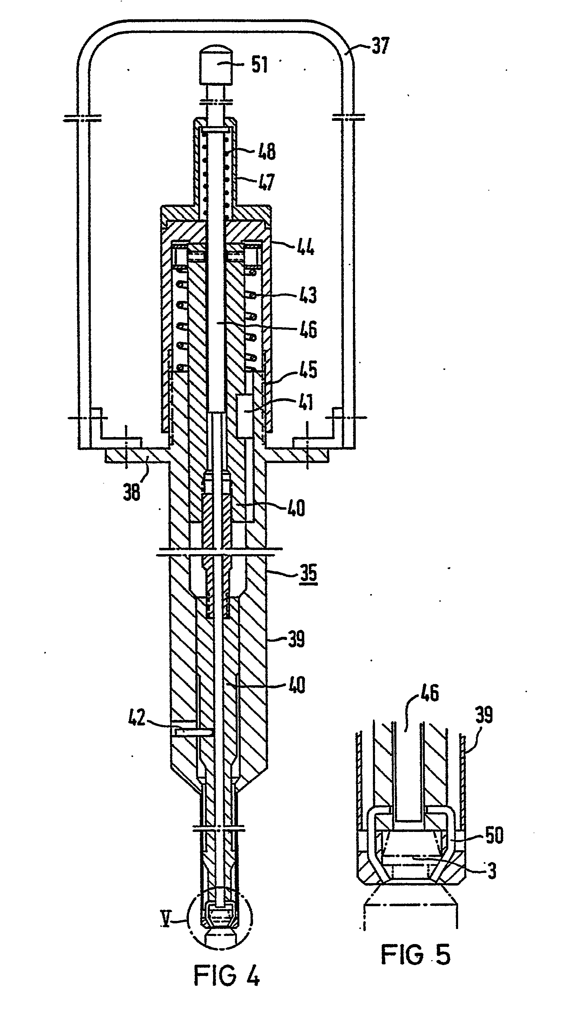

Wie die Figuren 4 bis 6 zeigen, weist das Betätigungswerkzeug 35 an seinem Oberende einen Bügel 37 auf, an dem der nicht näher dargestellte Kran angreift. Dieser Bügel 37 ist an einem Flansch 38 festgeschraubt, der sich außen an der Mantelfläche eines langgestreckten Grundkörpers 39 befindet. Im Grundkörper 39 ist koaxial ein langgestreckter Verstellkörper 40 angeordnet, der in Bezug auf den Grundkörper 39 in Richtung der Längsachse verschiebbar, durch einen Führungskörper 41 im Grundkörper 39 gegen Verdrehen um die Längsachse gesichert und mit einem querstehenden Anschlagstift 42 versehen ist, welcher die Bewegungsmöglichkeit des Verstellkörpers 40 in Längsrichtung begrenzt. Am Oberende des Verstellkörpers 40 sitzt eine aus einer Schraubenfeder 43 bestehende Rückstellfeder, die sich als Druckfeder mit einem Ende auf dem Grundkörper 39 und mit dem anderen Ende am Verstellkörper 40 abstützt. Das Ende des Verstellkörpers 40 mit der Rückstellfeder 43 befindet sich innerhalb einer Überwurfmutter 44, die mit einem Gewinde 45 am Grundkörper 39 angreift und an deren Boden das Ende des Verstellkörpers 40 anliegt.

Durch den Verstellkörper 40 ist der Länge nach koaxial zum Verstellkörper 40 eine Druckstange 46 geführt, die bezüglich dem Verstellkörper 40 in Längsrichtung verschiebbar ist. Diese Druckstange 46 greift durch eine Durchführung 47 im Boden der Überwurfmutter 44 nach außen. Innerhalb dieser Durchführung 47 sitzt auf der Druckstange 46 eine Schraubenfeder 48 als Rückstellfeder, die sich als Druckfeder mit einem Ende an der Überwurfmutter 44 und mit dem anderen Ende an der Druckstange 46 abstützt.

Am Unterende des Verstellkörpers 40 befindet sich, wie Figur 5 besonders deutlich zeigt, ein zweiteiliger Greifbügel 50 zum Hintergreifen der pilzartig ausgeführten Endkappe 3 des Austauschstabes im Kernreaktorbrennelement 31. Durch Drehen an der Überwurfmutter 44 in dem einen oder dem anderen Drehsinn kann der Verstellkörper 40 zum Greifen der Endkappe 3 auf diese zubewegt oder zum Freigeben der Endkappe 3 von dieser unter Einwirkung der Rückstellfeder 43 in axialer Richtung wegbewegt werden, so daß sich die beiden vorgespannten Enden des Greifbügels 50 spreizen.

Durch Verschieben der Druckstange 46 in axialer Richtung auf die Endkappe 3 des Austauschstabes zu kann die Betätigungsstange 14 in axialer Richtung in das Innere des Austauschstabes hineingeschoben werden, nachdem die Endkappe 3 durch entsprechendes Drehen an der Überwurfmutter 44 fest vom Greifbügel 50 ergriffen ist.

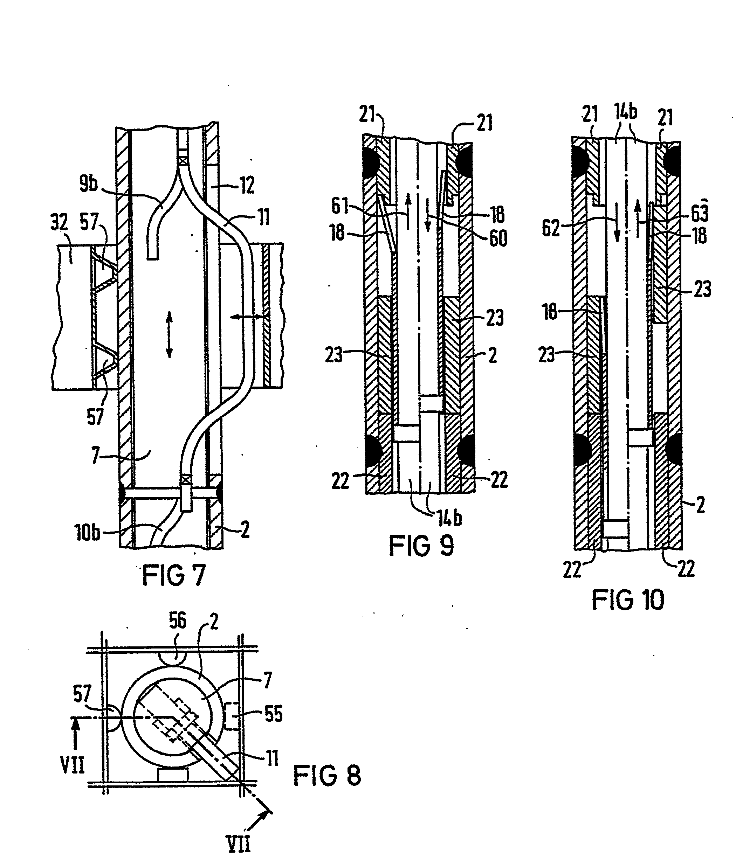

In der in Figur 6 größer dargestellten Konfiguration, in der das Betätigungswerkzeug 35 durch die Zentrierplatte 33 greift und mit dem Haltebügel 50 die Endkappe 3 des in den Abstandhaltern 32 des Kernreaktorbrennelementes 31 eingesetzten Austauschstabes festhält, wird die Druckstange 46 an der Handhabe 51 an ihrem Oberende auf die Endkappe 3 des Austauschstabes zu verschoben. Dadurch wird auch die Betätigungsstange 14 mit dem Gleitkörper 7 in das Hüllrohr 2 des Austauschstabes hinein verschoben und die Haltefeder 11 unter Einwirkung der Kulissen 9a, 9b und 10a, 10b durch die Durchführung 12 im Hüllrohr 2 nach außen geschoben. Wie die Figuren 7 und 8 zeigen, wird hierbei die Haltefeder 11 günstigerweise in eine Ecke der Masche des Abstandhalters 32 angeordnet, in der beispielsweise eine Haltefeder 55, die sich in der Mitte einer Maschenseite befindet, gebrochen ist. Mit Hilfe von vier Noppen 56 und 57, von denen sich jeweils zwei auf einer zur Längsrichtung der Masche parallelen Geraden in der Mitte zweier benachbarter Maschenseiten befinden, wird dann der Austauschstab besonders stabil in der Masche kraftschlüssig gehalten.

In der rechten Hälfte der Figur 9 ist durch den Pfeil 60 die Bewegung des Teiles 14b der Betätigungsstange 14 zum Ausschieben der Haltefeder 11 aus dem Hüllrohr 2 des Austauschstabes angedeutet. Die Zungenfedern 18, die mit ihrer der Bewegungsrichtung nach Pfeil 60 zugewandten Enden am Teil 14b der Betätigungsstange 14 befestigt sind, treten bei dieser Bewegung des Teiles 14b schließlich mit den anderen Enden aus der Hülse 21 hervor und spreizen diese anderen Enden nach außen. Nach Entlastung der Druckstange 46 des Betätigungswerkzeuges 35 und damit auch der Betätigungsstange 14 im Austauschstab führt diese Betätigungsstange 14, wie in der linken Hälfte der Figur 9 angedeutet ist, unter Einwirkung der Rückstellfeder 15 eine Gegenbewegung in Richtung des Pfeiles 61 aus, und die Zungenfedern 18 hintergreifen schließlich im Austauschstab die Hülse 21, so daß die in den Figuren 7 und 8 dargestellte ausgeschobene Haltefeder 11 in der in diesen Figuren 7 und 8 dargestellten Position verrastet und der Austauschstab in der Masche des Abstandhalters 32 kraftschlüssig gehalten ist.

Der Haltebügel 50 des Betätigungswerkzeuges 35 kann nun durch entgegengesetztes Drehen an der Überwurfmutter 44 und durch Wegbewegen des Verstellkörpers 40 unter Einwirkung der Rückstellfeder 43 von der Endkappe 3 gelöst und mit dem nicht dargestellten Kran zur Seite gehoben werden. Schließlich kann nach Abheben der Zentrierplatte 33 am Kernreaktorbrennelement 31 im Brennelementhalterungskorb 30 wieder ein Fußteil montiert und das Brennelement 31, nachdem es mit dem Haltekorb 30 um 180° um eine Drehachse quer zu seiner Längsachse geschwenkt worden ist, wieder in einen Kernreaktor eingesetzt werden.

Der Austauschstab nach den Figuren 1 und 2 kann mit dem in der Position nach Figur 6 dargestellten Betätigungswerkzeug 35 nach Figur 4 aus der in den Figuren 7 und 8 dargestellten Masche auch wieder gelöst werden. Zu diesem Zweck werden die Druckstange 46 und die Betätigungsstange 14 wieder in Längsrichtung auf die Endkappe 3 zu verschoben, so daß die in der linken Hälfte der Figur 9 verrastet dargestellten Zungenfedern 18 entrastet und entsprechend der in der linken Hälfte der Figur 10 durch den Pfeil 62 angedeuteten Bewegungsrichtung in die Klemmhülse 23 hineingeschoben werden, die bei diesem Vorgang durch die Hülse 22 an einer Bewegung in Längsrichtung des Hüllrohres 2 des Austauschstabes gehindert wird. Nach dem Entlasten der Druckstange 46 und damit auch der Betätigungsstange 14 wird die Betätigungsstange 14 unter Einwirkung der Rückstellfeder 15 im Austauschstab entsprechend dem Pfeil 63 in der rechten Hälfte der Figur 10 in entgegengesetzter Richtung bewegt. Hierbei nehmen die Zungenfedern 18 aufgrund ihrer radial nach außen gerichteten Federspannung die Klemmhülse 23 mit. Die Bewegung der Klemmhülse 23 in Längsrichtung des Hüllrohres 2 wird schließlich durch die Hülse 21 beendet, so daß die Klemmhülse 23 von den Zungenfedern 18 abgestreift wird und die Zungenfedern 18 in die in der rechten Hälfte der Figur 9 dargestellte Ausgangsposition in die Hülse 21 hineingeschoben werden, in der auch die Haltefeder 11 des Austauschstabes in das Hüllrohr 2 zurückgeschoben ist.

## Patentansprüche

1. Verfahren zum Reparieren eines Kernreaktorbrennelementes, das in einer Masche eines gitterförmigen Abstandhalters einen durch eine in dieser Masche am Abstandhalter befindliche Feder kraftschlüssig gehalterten, mit Kernbrennstoff gefüllten Brennstab aufweist, durch Ersetzen dieses Brennstabes, dadurch gekennzeichnet, daß der Brennstab durch einen Austauschstab ersetzt wird, der eine Haltefeder (11) zum kraftschlüssigen Haltern dieses Austauschstabes in der Masche am Abstandhalter (32) aufweist.

2. Verfahren nach Anspruch 1, dadurch gekennzeichnet, daß die Haltefeder (11) in einer Ecke der Masche angeordnet wird.

3. Austauschstab zur Durchführung eines Verfahrens nach Anspruch 1, dadurch gekennzeichnet, daß eine Haltefeder (11) durch eine Durchführung (12) im Mantel eines Hüllrohres (2) nach außen greift und in einer Kulisse (9a, 9b; 10a, 10b) an einem Gleitkörper (7) innerhalb des Hüllrohres (2) mit zugeordnetem Arretierorgan derart geführt ist, daß sie sich bei Bewegen des Gleitkörpers (7) in die eine Längsrichtung des Hüllrohres (2) radial nach außen und in die andere Längsrichtung radial nach innen verschiebt.

4. Austauschstab nach Anspruch 3, dadurch gekennzeichnet, daß der Gleitkörper (7) mit einer innerhalb des Hüllrohres (2) verschiebbaren Betätigungsstange (14) versehen ist, die außen auf der Mantelfläche als Arretierorgan eine sich mit zwei Enden in Längsrichtung der Betätigungsstange (14) erstreckende Zungenfeder (18) aufweist, von denen das eine der Bewegungsrichtung des Gleitkörpers (7) zum Ausschieben der Haltefeder (11) zugewandte Ende an der Betätigungsstange (14b) befestigt ist und das andere Ende zum Hintergreifen einer vorstehenden Arretierschulter innen am Hüllrohr (2) von der Mantelfläche der Betätigungsstange (14b) abzustehen sucht, daß innen am Hüllrohr (2) mit Abstand von der Arretierschulter in Bewegungsrichtung des Gleitkörpers (7) zum Ausschieben der Haltefeder (11) eine vorstehende Anschlagschulter für eine Klemmhülse (23) angeordnet ist, daß die Klemmhülse (23) im Hüllrohr (2) koaxial zwischen Arretierschulter und Anschlagschulter in Längsrichtung des Hüllrohres (2) verschiebbar angeordnet ist, daß die innere Mantelfläche der Klemmhülse (23) die Arretierschulter in radialer Richtung überragt und radialen Abstand von der Betätigungsstange (14b) hat, der größer ist als die Dicke der Zungenfeder (18), und daß der Abstand zwischen Arretierschulter und Anschlagschulter größer ist als die Summe aus der Länge der Klemmhülse (23) und der Länge der Zungenfeder (18) in Längsrichtung der Betätigungsstange (14).

## Claims

1. Method for repairing a nuclear reactor fuel assembly including a fuel rod in a mesh of a latticed spacer, which fuel rod is held in a force-locking manner by a spring located in the mesh on the spacer and is filled with nuclear fuel, by replacing the fuel rod, characterized in that the fuel rod is replaced by a replacement rod which has a retaining spring (11) for the force-locking retention of the replacement rod in the mesh on the spacer (32).

2. Method according to claim 1, characterized in that the retaining spring (11) is arranged in a corner of the mesh.

3. Replacement rod for carrying out a method according to claim 1, characterized in that a retaining spring (11) engages the outside through an opening (12) in the shell of a cladding tube (2) and is conducted in a link (9a, 9b; 10a, 10b) to a sliding body (7), within the cladding tube (2), having associated locking means, in such a way that when the sliding body (7) moves in one longitudinal direction of the cladding tube (2) the spring is displaced radially outwards and when the sliding body moves in the other longitudinal direction the spring is displaced radially inwards.

4. Replacement rod according to claim 3, characterized in that the sliding body (7) is provided with an actuating rod (14) which can be displaced within the cladding tube (2) and which has on the outer lateral surface a tongue spring (18), as locking means, having two ends extending in the longitudinal direction of the actuating rod (14), one of the ends which faces the movement direction of the sliding body (7) for the expulsion of the retaining spring (11) being fastened to the actuating rod (14b), and the other end tending to stand away from the lateral surface of the actuating rod (14b) to engage from behind a projecting locking shoulder on the inside of the cladding tube (2), in that a projecting stop shoulder for a clamping sheath (23) is arranged on the inside of the cladding tube (2), spaced from the locking shoulder in the movement direction of the sliding body (7) for the expulsion of the retaining spring (11), in that the clamping sheath (23) is arranged coaxially in the cladding tube (2) and is displaceable between locking shoulder and stop shoulder in the longitudinal direction of the cladding tube (2), in that the inner lateral surface of the clamping sheath (23) projects beyond the locking shoulder in radial direction and is spaced radially from the actuating rod (14b), the spacing being greater than the thickness of the tongue spring (18), and in that the spacing between locking shoulder and stop shoulder is greater than the sum of the length of the clamping sheath (23) and the length of the tongue spring (18) in the longitudinal direction of the actuating rod (14).

## Revendications

1. Procédé de réparation d'un assemblage combustible de réacteur nucléaire qui comporte, dans une maille d'une entretoise en forme de grille, un crayon combustible maintenu positivement par un ressort se trouvant dans cette maille de l'entretoise et empli de combustible nucléaire, par remplacement de ce crayon combustible, caractérisé en ce qu'il consiste à remplacer le crayon combustible par un crayon de remplacement qui comporte un ressort de maintien (11) pour le maintien positif de ce crayon de remplacement dans la maille de l'entretoise (32).

2. Procédé suivant la revendication 1, caractérisé en ce qu'il consiste à disposer le ressort de maintien (11) en un sommet de la maille.

3. Crayon de remplacement pour la mise en œuvre d'un procédé suivant la revendication 1, caractérisé en ce qu'un ressort de maintien (11) sort à l'extérieur, par un passage (12) ménagé dans la face latérale d'un tube de guidage (2), et est guidé, dans une coulisse (9a, 9b, 10a, 10b), sur une pièce coulissante (7), à l'intérieur du tube de gainage (2), en ayant un organe de blocage associé, de façon à coulisser, lors du déplacement de la pièce coulissante (7) dans l'un des sens longitudinaux du tube de gainage (2), radialement vers l'extérieur et, dans l'autre sens longitudinal, radialement vers l'intérieur.

4. Crayon de remplacement suivant la revendication 3, caractérisé en ce que la pièce coulissante (7) est munie d'une tige de manœuvre (14) qui peut coulisser à l'intérieur du tube de gainage (2) et qui comporte, à l'extérieur sur la surface latérale, comme organe de blocage, un ressort à languette (18) s'étendant par deux extrémités dans la direction longitudinale de la tige de manœuvre (14), l'extrémité tournée dans le sens de déplacement de la pièce coulissante (7) pour l'expulsion du ressort de maintien (11) étant fixée à la tige de manœuvre (14b) et l'autre extrémité tendant à s'écarter de la surface latérale de la tige de manœuvre (14b) pour venir s'accrocher sous un épaulement de blocage en saillie à l'intérieur du tube de gainage (2), en ce qu'à l'intérieur du tube de gainage (2) et à distance de l'épaulement de blocage dans la direction de déplacement de la pièce coulissante (7), est monté, pour expulser le ressort de maintien (11), un épaulement de butée en saillie pour une douille de blocage (23), en ce que la douille de blocage (23) est montée coaxialement dans le tube de gainage (2), en coulissant entre l'épaulement de blocage et l'épaulement de butée dans la direction longitudinale du tube de gainage (2), en ce que la surface latérale intérieure de la douille de blocage (23) dépasse, dans la direction radiale, de l'épaulement de blocage et est à une distance radiale de la tige de manœuvre (14b) qui est supérieure à l'épaisseur du ressort à languette (18), et en ce que la distance entre l'épaulement de blocage et l'épaulement de butée est supérieure à la somme de la longueur de la douille de blocage (23) et de la longueur du ressort à languette (18) dans la direction longitudinale de la tige de manœuvre (14).

6

EP 0 252 375 B1

FIG 2

FIG 1

FIG 3

FIG 6

FIG 4

FIG 5

EP 0 252 375 B1

FIG 7

FIG 9

FIG 10

FIG 8